# EUROPEAN PATENT SPECIFICATION

(11) **EP 4 091 880 B1**
(45) Date of publication and mention of the grant of the patent: **13.08.2025**
(21) Application number: 22173836.2
(22) Date of filing: 17.05.2022
(51) Int. Cl.: B62D 33/067, B60Q 1/00, B60Q 1/068

(54) **A CAB-OVER ENGINE TRUCK**
FRONTLENKER-LKW
CAMION À CABINE AVANCÉE

(30) Priority: 19.05.2021 NL 2028239
(43) Date of publication of application: 23.11.2022
(73) Proprietor: DAF Trucks N.V., 5643 TW Eindhoven (NL)
(72) Inventor: ASGHARI, Kurosch Hossein, 5643 TW Eindhoven (NL)
(74) Representative: V.O.

(56) References cited:
- DE-A1- 102004 061 483
- DE-A1- 2 804 651
- JP-A- H08 268 360
- TW-A- 201 313 531
- TW-A- 201 313 531
- US-A1- 2014 029 278

## Description

The invention relates to a cab-over engine truck.

A cab-over engine truck is known from DE2804651A which truck has a front side, a chassis, an engine compartment and a driver cabin at least partially positioned over the engine compartment, the driver cabin including an cabin part that is tiltable with regard to the chassis to allow access to the engine compartment by being hinged about a horizontal axis arranged at the front side, the chassis comprising a chassis part that remains associated with the chassis when the cabin part is tilted, the cabin part having a front section carrying a headlight unit for producing a high beam and/or a low beam, the headlight unit comprising a vertical positioning adjustment member for adjusting the vertical position of the high beam and/or a low beam and a horizontal positioning adjustment member for adjusting the horizontal position of the high beam and/or a low beam, wherein the cab-over engine truck comprises an adjustment mechanism having first ends engaging the vertical positioning adjustment member and the horizontal positioning adjustment member and second ends for being operated by an operator, wherein the front side of the cabin part comprises an adjustment mechanism access opening for allowing access to the second ends of the adjustment mechanism.

Another motor vehicle is for example known from EP3421335A1. According the legislations e.g. the low beam of a cab-over engine truck needs to be aimed to the road in a downwards inclination angle within a certain legal boundaries which usually will be controlled and adjusted by the approval agencies yearly during vehicle technical controls or during delivery of the cab-over engine truck by the dealers to the customers. In the cab-over engine truck known from EP3421335A1 which includes an cabin part that is tiltable with regard to the chassis to allow access to the engine compartment adjustment of the vertical and/or horizontal position of the high beam and/or a low beam cannot be effected when the cabin part is tilted since in this tilted position the center of gravity of the driver cabin of the cab-over engine truck is displaced from the center of gravity when the driver cabin is positioned in the usual driving position of the cab-over engine truck. For this reason, in the cab-over engine truck known from EP3421335A1 service caps are provided in side walls of the step region, the step region comprising the steps leading to the door opening of the driver cabin. The service caps are provided behind the headlight unit and can be opened for accessing the horizontal and vertical positioning adjustment members of the headlight unit. However, adjustment of the vertical and/or horizontal position of the high beam and/or a low beam in this manner is laborious since reaching the horizontal and vertical positioning adjustment members of the headlight unit can be difficult for an operator.

It is an object of the present invention to provide a cab-over engine truck in which adjustment of the vertical and/or horizontal position of the high beam and/or a low beam of a headlight unit can effected in a less laborious manner.

According to the invention this object is obtained by providing a cab-over engine truck as claimed in claim 1. By using an adjustment mechanism access opening at the front side of the chassis part and/or cabin part the second ends of the adjustment mechanism can be easily accessed by an operator thereby making the operation of adjusting the horizontal and/or vertical position of the high beam and/or a low beam more easy. In this manner the space behind the headlight washer cap also functions as adjustment mechanism access opening and thus no separate adjustment mechanism access opening needs to be provided in the chassis part and/or cabin part. It is then preferred when the headlight washer cap is configured for being positioned in the operative position independent of the operational state of the headlight washer, in other words the headlight washer is configured for being deactivated when positioned in its operative position.

By positioning the adjustment mechanism access opening adjacent the headlight unit the operator can easily visually check whether or not operating the second ends of the adjustment mechanism is changing the horizontal and/or vertical position of the high beam and/or a low beam.

In a further embodiment of a cab-over engine truck according to the invention the adjustment mechanism comprises flexible cables extending from the second ends of the adjustment mechanism to the first ends of the adjustment mechanism. By using flexible cables the adjustment mechanism can be realized in a relatively simple and robust manner.

The invention will be further explained with reference to the Figures, in which a non-limiting exemplary embodiment of according to the invention is shown:
Fig. 1 schematically shows in side view an embodiment of a cab-over engine truck according to the invention in a position in which the cabin part of the driver cabin is tilted with regard to the chassis to allow access to the engine compartment;
Fig. 2 schematically shows in side view the embodiment of a cab-over engine truck according to Figure 1 in a position in which the cabin part of the driver cabin is closed;
Fig. 3 schematically shows in perspective a prior art cab-over engine truck comprising service caps are provided in side walls of the step region, which service caps can be opened for accessing adjustment members of a headlight unit;
Fig. 4 schematically shows in perspective a headlight unit vertical with horizontal and vertical positioning adjustment members for adjusting the horizontal and vertical position of the high beam and/or a low beam, respectively;
Fig. 5 schematically shows in front view an embodiment of a cab-over engine truck according to the invention comprising an adjustment mechanism access opening arranged behind the headlight washer cap, in which the headlight washer cap is positioned in its operative position;
Fig. 6 schematically shows in front view the embodiment of a cab-over engine truck according to Figure 5 in which the headlight washer cap is positioned in its inoperative position flush with the front of the headlight unit;
Fig. 7 schematically shows in front view the embodiment of a cab-over engine truck according to Figure 5 in which an adjustment tool is in engagement with the second ends of the adjustment mechanism;
Fig. 8 schematically shows in perspective an embodiment of a cab-over engine truck according to the invention in which the adjustment mechanism comprises flexible cables extending from the second ends of the adjustment mechanism to the first ends of the adjustment mechanism; and
Fig. 9 schematically shows in perspective an embodiment of a cab-over engine truck according to the invention comprising an alternative adjustment mechanism comprising rods having gear heads in engagement with each other.

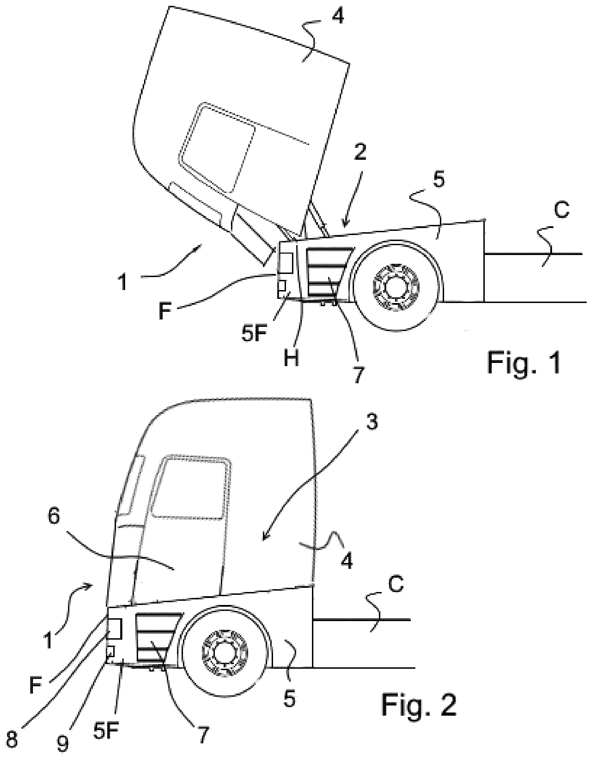

In Figures 1 and 2 an embodiment of a cab-over engine truck 1 is schematically shown in side view. The cab-over engine truck 1 has a front side F, a chassis C, an engine compartment 2 and a driver cabin 3 which is at least partially positioned over the engine compartment 2.

The driver cabin 3 comprises an cabin part 4 that is tiltable with regard to the chassis C to allow access to the engine compartment 2 by being hinged about a horizontal axis H arranged at the front side F. The chassis C has a chassis part 5 that remains associated with the chassis C when the cabin part 4 is tilted. In Figure 1 the situation is shown in which the cabin part 4 of the driver cabin 3 is tilted to allow access to the engine compartment 2, while in Figure 2 the cabin part 4 is shown in closed position. The driver cabin 3 is further provided with a door 6 for accessing the driver cabin 3 and a number of steps 7 leading to the door 6 of the driver cabin 3.

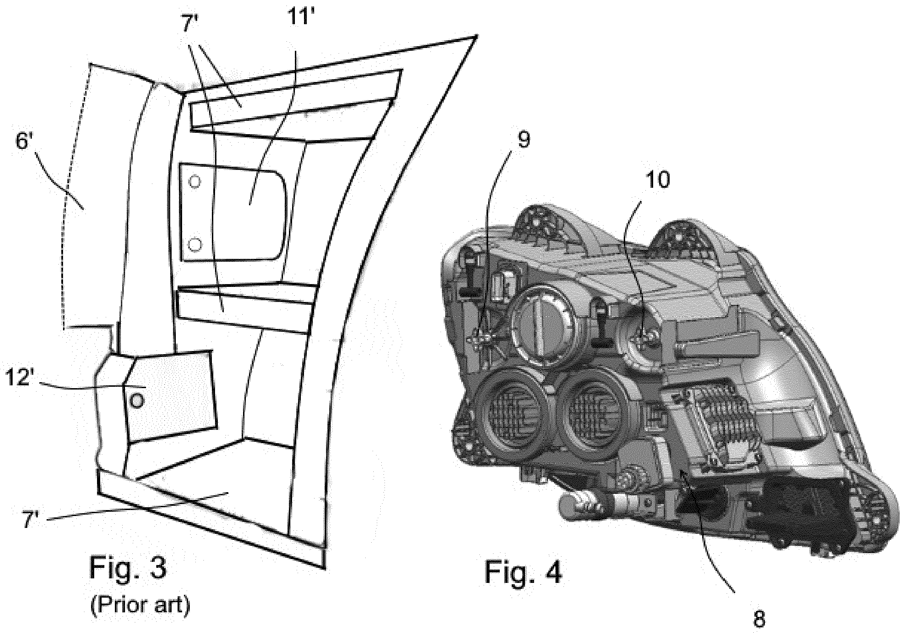

The invention will be described with regard to embodiments in which the chassis part 5 has a front section 5F carrying a headlight unit 8 for producing a high beam and/or a low beam and in the shown embodiment a fog light 9. As shown in Figure 4 the headlight unit 8 comprises a vertical positioning adjustment member 9 for adjusting the vertical position of the high beam and/or a low beam and a horizontal positioning adjustment member 10 for adjusting the horizontal position of the high beam and/or a low beam. The invention is also applicable to embodiments in which the headlight unit is arranged in the cabin part.

In Figure 3 a part of a prior art cab-over engine truck known from EP3421335A1 is schematically shown, which comprises service caps 11', 12' provided in side walls of the step region, which service caps can be opened for accessing adjustment members of a headlight unit. In the cab-over engine truck known from EP3421335A1 the service caps are provided in side walls of the step region comprising steps 7' positioned below the door 6'. The service caps 11', 12' are provided behind the headlight unit and the fog light, respectively and can be opened to provide an adjustment mechanism access opening for accessing the horizontal and vertical positioning adjustment members of the headlight unit and for accessing the fog light.

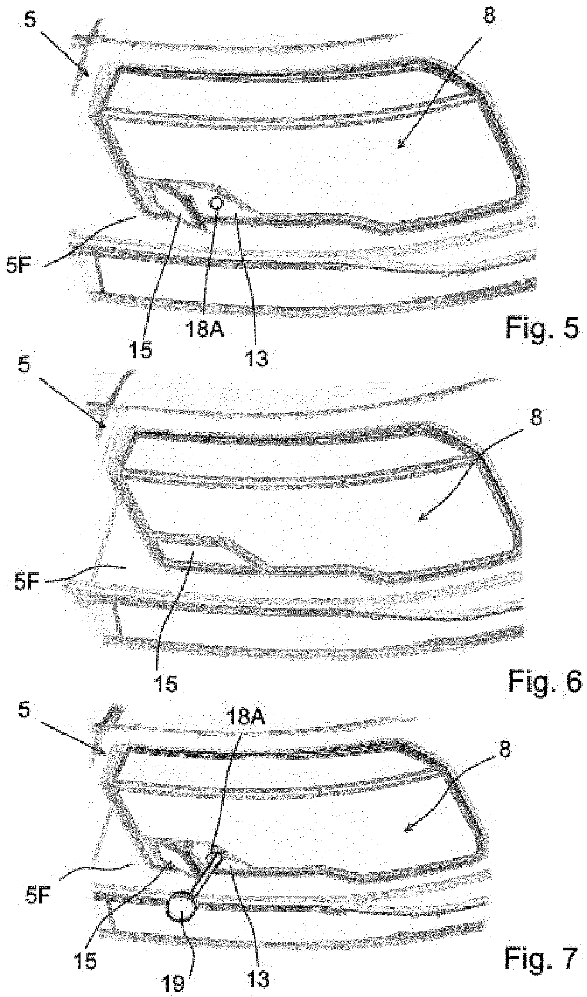

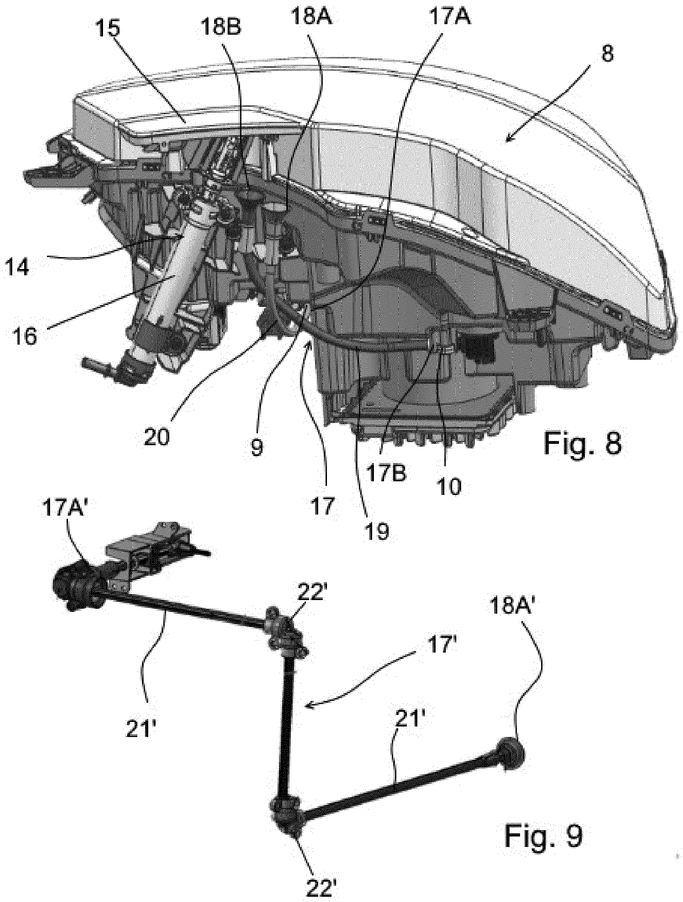

In contrast to the prior art cab-over engine truck shown in Figure 3, according to the present invention the adjustment mechanism access opening 13 is positioned adjacent the headlight unit 8 at the front side 5F of the chassis part 5. In the embodiment shown in Figures 5 to 8 the front section 5F of the chassis part 5 comprises a headlight washer unit 14 for washing a front of the headlight unit 8. As indicated in Figure 8, the headlight washer unit 14 is positioned adjacent the headlight unit 8 and comprises a headlight washer cap 15 behind which a headlight washer 16 is arranged. The headlight washer cap 15 is configured to be positioned in either an inoperative position flush with the front of the headlight unit 8 (indicated in Figures 6 and 8) and covering the headlight washer 16 or an operative position in which the headlight washer cap 15 exposes the headlight washer 16 (as indicated in Figure 5 and 7).

As is usual in the art the headlight washer 16 is configured to be positioned in either an inoperative position covered by the headlight washer cap 15 when in inoperative position or an operative position in which the headlight washer 16 extends in a forwards direction beyond the headlight washer cap 15 in its operative position.

In the embodiment shown in Figures 5 to 8 the adjustment mechanism access opening 13 is positioned adjacent the headlight unit 8 behind the headlight washer cap 15. Please note that the invention is not restricted to this embodiment, and that in other (not shown) embodiments the adjustment mechanism access opening can be integrally arranged in the headlight unit or can be provided at another position at the front side of the chassis part. In all the embodiments adjustment mechanism access opening 13 is preferably covered with a removable cover.

In the embodiment shown in Figures 5 to 8, the headlight washer cap 15 is configured for being positioned in the operative position independent of the operational state of the headlight washer 16, in other words the headlight washer 16 is configured for being deactivated when positioned in its operative position to allow undisturbed access to the adjustment mechanism access opening 13.

As indicated in Figure 8 the cab-over engine truck 1 comprises an adjustment mechanism 17 having a first end 17A engaging the vertical positioning adjustment member 9 and a first end 17B the horizontal positioning adjustment member 10. Second ends 18A, 18B adjustment mechanism 17 can be operated upon by an operator e.g. via an adjustment tool 19 (see Figure 7) for adjusting the vertical position of the high beam and/or a low beam and a horizontal positioning adjustment member for adjusting the horizontal position of the high beam and/or a low beam. In the embodiment shown in Figure 8 the adjustment mechanism 17 comprises flexible cables 19, 20 extending from the second ends 18A, 18B of the adjustment mechanism 17 to the first ends 17A, 17B of the adjustment mechanism 17. However, the invention is not restricted to the use of flexible cables as means for transferring the adjustment by the operator from the second ends to the first ends of the adjustment mechanism, but any other means, such as rods 21' having gear heads 22' in engagement with each other as shown in Figure 9 can be used for transferring the adjustment by the operator from the second end 18A' to the first end 17A' of the adjustment mechanism 17'.

## Claims

1. A cab-over engine truck (1) having a front side (F), a chassis (C), an engine compartment (2) and a driver cabin (3) at least partially positioned over the engine compartment (2), the driver cabin (3) including an cabin part (4) that is tiltable with regard to the chassis (C) to allow access to the engine compartment (2) by being hinged about a horizontal axis (H) arranged at the front side (F), the chassis (C) comprising a chassis part (5) that remains associated with the chassis (C) when the cabin part (4) is tilted, the chassis part (5) and/or cabin part (4) having a front section carrying a headlight unit (8) for producing a high beam and/or a low beam, the headlight unit (8) comprising a vertical positioning adjustment member (9) for adjusting the vertical position of the high beam and/or a low beam and a horizontal positioning adjustment member (10) for adjusting the horizontal position of the high beam and/or a low beam, wherein the cab-over engine truck (1) comprises an adjustment mechanism (17, 17') having first ends (17A, 17B) engaging the vertical positioning adjustment member (9) and the horizontal positioning adjustment member (10) and second ends (18A, 18B) for being operated by an operator, wherein the front side of the chassis part (5) and/or cabin part (4) comprises an adjustment mechanism access opening (13) for allowing access to the second ends (18A, 18B) of the adjustment mechanism (17, 17'), wherein the front section of the chassis part (5) and/or cabin part (4) comprises a headlight washer unit (14) for washing a front of the headlight unit (8), the headlight washer unit (14) being positioned adjacent the headlight unit (8) and having a headlight washer (16) and a headlight washer cap (15), the headlight washer cap (15) being configured to be positioned in either an inoperative position flush with the front of the headlight unit (8) and covering the headlight washer (16) or an operative position in which the headlight washer cap (15) exposes the headlight washer (16), the headlight washer (16) being configured to be positioned in either an inoperative position covered by the headlight washer cap (15) when in inoperative position or an operative position in which the headlight washer (16) extends in a forwards direction beyond the headlight washer cap (15) in its operative position, the adjustment mechanism access opening (13) being arranged behind the headlight washer cap (15).

2. A cab-over engine truck (1) according to claim 1, wherein headlight washer (16) is configured for being deactivated when positioned in its operative position.

3. A cab-over engine truck (1) according to any one of the preceding claims, wherein the adjustment mechanism (17') comprises flexible cables (19, 20) extending from the second ends (18A, 18B) of the adjustment mechanism (17) to the first ends (17A, 17B) of the adjustment mechanism (17).

## Patentansprüche

1. Frontlenker-LKW (1) mit einer Vorderseite (F), einem Chassis (C), einem Motorraum (2) und einer Fahrerkabine (3), die zumindest teilweise über dem Motorraum (2) angeordnet ist, wobei die Fahrerkabine (3) ein Kabinenteil (4) beinhaltet, das in Bezug auf das Chassis (C) kippbar ist, um den Zugang zum Motorraum (2) zu ermöglichen, indem es um eine an der Vorderseite (F) angeordnete horizontale Achse (H) schwenkbar ist, wobei das Chassis (C) ein Chassisteil (5) umfasst, das mit dem Chassis (C) verbunden bleibt, wenn das Kabinenteil (4) gekippt ist, wobei das ChassisTeil (5) und/oder das Kabinenteil (4) einen vorderen Abschnitt aufweist, der eine Scheinwerfereinheit (8) zur Erzeugung eines Fernlichts und/oder eines Abblendlichts trägt, wobei die Scheinwerfereinheit (8) ein vertikales Positionierungseinstellglied (9) zur Einstellung der vertikalen Position des Fernlichts und/oder eines Abblendlichts und ein horizontales Positionierungseinstellglied (10) zur Einstellung der horizontalen Position des Fernlichts und/oder eines Abblendlichts umfasst, wobei der Frontlenker-LKW (1) einen Einstellmechanismus (17, 17') mit ersten Enden (17A, 17B), die mit dem vertikalen Positionierungseinstellglied (9) und dem horizontalen Positionierungseinstellglied (10) in Eingriff stehen, und zweiten Enden (18A, 18B) zur Betätigung durch einen Bediener umfasst, wobei die Vorderseite des Chassis-Teils (5) und/oder des Kabinenteils (4) eine Zugangsöffnung (13) für den Einstellmechanismus umfasst, um Zugang zu den zweiten Enden (18A, 18B) des Einstellmechanismus (17, 17') zu ermöglichen, wobei der vordere Abschnitt des Chassis-Teils (5) und/oder des Kabinenteils (4) eine Scheinwerferwascheinheit (14) zum Waschen einer Vorderseite der Scheinwerfereinheit (8) umfasst, wobei die Scheinwerferwascheinheit (14) neben der Scheinwerfereinheit (8) positioniert ist und eine Scheinwerferwaschanlage (16) und eine Scheinwerferwaschanlagenkappe (15) aufweist, wobei die Scheinwerferwaschanlagenkappe (15) so konfiguriert ist, dass sie entweder in einer Außerbetriebsstellung, die mit der Vorderseite der Scheinwerfereinheit (8) bündig ist und die Scheinwerferwaschanlage (16) abdeckt, oder in einer Betriebsstellung, in der die Scheinwerferwaschanlagenkappe (15) die Scheinwerferwaschanlage (16) freilegt, positioniert ist, wobei die Scheinwerferwaschanlage (16) so konfiguriert ist, dass sie entweder in einer Außerbetriebsstellung, die durch die Scheinwerferwaschanlagenkappe (15) abgedeckt ist, wenn sie sich in der Außerbetriebsstellung befindet, oder in einer Betriebsstellung positioniert werden kann, in der sich die Scheinwerferwaschanlage (16) in ihrer Betriebsstellung in einer Vorwärtsrichtung über die Scheinwerferwaschanlagenkappe (15) hinaus erstreckt, wobei die Zugangsöffnung (13) des Einstellmechanismus hinter der Scheinwerferwaschanlagenkappe (15) angeordnet ist.

2. Frontlenker-LKW (1) nach Anspruch 1, wobei die Scheinwerferwaschanlage (16) so konfiguriert ist, dass sie deaktiviert ist, wenn sie sich in ihrer Betriebsstellung befindet.

3. Frontlenker-LKW (1) nach einem der vorstehenden Ansprüche, wobei der Einstellmechanismus (17') flexible Kabel (19, 20) umfasst, die sich von den zweiten Enden (18A, 18B) des Einstellmechanismus (17) zu den ersten Enden (17A, 17B) des Einstellmechanismus (17) erstrecken.

## Revendications

1. Camion à cabine avancée (1) présentant un côté avant (F), un châssis (C), un compartiment moteur (2) et une cabine de conducteur (3) positionnée au moins partiellement au-dessus du compartiment moteur (2), la cabine de conducteur (3) incluant une partie de cabine (4) qui peut être inclinée par rapport au châssis (C) pour permettre un accès au compartiment moteur (2) en étant articulée autour d'un axe horizontal (H) agencé au niveau du côté avant (F), le châssis (C) comprenant une partie de châssis (5) qui reste associée au châssis (C) lorsque la partie de cabine (4) est inclinée, la partie de châssis (5) et/ou la partie de cabine (4) présentant une section avant portant une unité de phare (8) pour produire un faisceau de route et/ou un faisceau de croisement, l'unité de phare (8) comprenant un élément d'ajustement de positionnement vertical (9) pour ajuster la position verticale du faisceau de route et/ou d'un faisceau de croisement et un élément d'ajustement de positionnement horizontal (10) pour ajuster la position horizontale du faisceau de route et/ou d'un faisceau de croisement, dans lequel le camion à cabine avancée (1) comprend un mécanisme d'ajustement (17, 17') présentant des premières extrémités (17A, 17B) venant en prise avec l'élément d'ajustement de positionnement vertical (9) et l'élément d'ajustement de positionnement horizontal (10) et des secondes extrémités (18A, 18B) destinées à être actionnées par un opérateur, dans lequel le côté avant de la partie de châssis (5) et/ou de la partie de cabine (4) comprend une ouverture d'accès au mécanisme d'ajustement (13) pour permettre un accès aux secondes extrémités (18A, 18B) du mécanisme d'ajustement (17, 17'), dans lequel la section avant de la partie de châssis (5) et/ou de la partie cabine (4) comprend une unité de dispositif de lavage de phare (14) pour laver une partie avant de l'unité de phare (8), l'unité de dispositif de lavage de phare (14) étant positionnée adjacente à l'unité de phare (8) et présentant un dispositif de lavage de phare (16) et un couvercle de dispositif de lavage de phare (15), le couvercle de dispositif de lavage de phare (15) étant configuré pour être positionné soit dans une position inactive affleurant la partie avant de l'unité de phare (8) et recouvrant le dispositif de lavage de phare (16), soit dans une position opérationnelle dans laquelle le couvercle de dispositif de lavage de phare (15) expose le dispositif de lavage de phare (16), le dispositif de lavage de phare (16) étant configuré pour être positionné soit dans une position inopérationnelle recouverte par le couvercle de dispositif de lavage de phare (15) lorsque dans une position inopérationnelle, soit dans une position opérationnelle dans laquelle le dispositif de lavage de phare (16) s'étend dans une direction vers l'avant au-delà du couvercle de dispositif de lavage de phare (15) dans sa position opérationnelle, l'ouverture d'accès au mécanisme d'ajustement (13) étant agencée derrière le couvercle de dispositif de lavage de phare (15).

2. Camion à cabine avancée (1) selon la revendication 1, dans lequel le dispositif de lavage de phare (16) est configurée pour être désactivée lorsqu'elle est positionnée dans sa position opérationnelle.

3. Camion à cabine avanscée (1) selon l'une quelconque des revendications précédentes, dans lequel le mécanisme d'ajustement (17') comprend des câbles flexibles (19, 20) s'étendant depuis les secondes extrémités (18A, 18B) du mécanisme d'ajustement (17) jusqu'aux premières extrémités (17A, 17B) du mécanisme d'ajustement (17).
